Europäisches Patentamt

European Patent Office

Office européen des brevets

(19)

(11) Veröffentlichungsnummer: **0 231 296 B1**

# (12) EUROPÄISCHE PATENTSCHRIFT

(45) Veröffentlichungstag der Patentschrift: 23.10.91

(51) Int. Cl.⁵: **B32B 27/08**, B32B 31/12

(21) Anmeldenummer: 86904770.4

(22) Anmeldetag: 31.07.86

(86) Internationale Anmeldenummer:
PCT/DE86/00313

(87) Internationale Veröffentlichungsnummer:
WO 87/00795 (12.02.87 87/04)

(54) SCHRUMPFFOLIE UND VERFAHREN ZUR HERSTELLUNG EINER SCHRUMPFFOLIE.

(30) Priorität: 02.08.85 DE 3527805
09.08.85 DE 3528666

(43) Veröffentlichungstag der Anmeldung:
12.08.87 Patentblatt 87/33

(45) Bekanntmachung des Hinweises auf die
Patenterteilung:
23.10.91 Patentblatt 91/43

(84) Benannte Vertragsstaaten:
AT BE CH DE FR GB IT LI LU NL SE

(56) Entgegenhaltungen:
EP-A- 0 065 278
CA-A- 1 181 213
GB-A- 1 348 660
GB-A- 1 392 212
US-A- 4 228 215

See also references of WO8700795

(73) Patentinhaber: AUCH FOLIEN GMBH
Hopfengartenweg 28
W-7300 Esslingen(DE)

(72) Erfinder: AUCH, Dietmar
Hopfengartenweg 28
W-7300 Esslingen(DE)

(74) Vertreter: Müller, Enno et al
Rieder & Partner Corneliusstrasse 45
W-5600 Wuppertal 11(DE)

# Beschreibung

Die Erfindung betrifft ein Verfahren zur Herstellung einer schrumpfbaren Verbundfolie gemäß den Merkmalen des Oberbegriffs des Anspruches 1.

Ein Verfahren zur Herstellung einer Folie aus zwei Schichten ist aus der US-PS 4 228 215 bekannt. Jedoch bezieht sich diese Druckschrift nicht auf eine schrumpfbare Verbundfolie. Konkret ist dort eine Laminat-Folie beschrieben, die unter Bildung von Zellen gegenseitig verschweißt ist. Der GB-A-1 392 212 ist eine Verbundfolie bekannt, deren Einzelfolien unterschiedliche Erweichungs- bzw. Schrumpftemperaturen aufweisen. Diese Verbundfolie ist aber hinsichtlich einer Gasdichtigkeit nicht zufriedenstellend.

Die Erfindung schlägt ferner eine Schrumpffolie vor, die in bezug auf eine Verwendung für Verpackungszwecke optimiert ist. Insbesondere ergibt sich eine optimale Ausbildung der Barriereschicht, bei einfacher Herstellbarkeit.

Im Unterschied zu den bekannten Verfahren wird eine nicht thermofixierte gereckte Folie verwendet. Weiter werden beide Folien mit einer Klebeschicht versehen und der Barrierestoff in Form einer Dispersion bei Raumtemperatur auf eine der Folien aufgebracht und die verbundenen Folien sodann gemeinsam geschrumpft.

Ein ganz wesentliches Element dieser erfindungsgemäß weitergebildeten Verfahrensweise ist die Aufbringung des Barrierestoffes in Form einer flüssigen Dispersion. Diese Maßnahme ermöglicht es, den Barrierestoff in praktisch reiner Form, lediglich mit Wasser versetzt, aufzubringen. Im Stand der Technik ist der Stoff für die Gasbarriereschicht immer mit Copolymeren versetzt, die notwendig sind, um die Gasbarriereschicht auf eine Folie zu extrudieren, wie dies im Stand der Technik gelehrt wird. Durch diese Versetzung mit Copolymeren werden jedoch nicht nur die Gasdurchlaßeigenschaften des Barrieregrundstoffes negativ beeinflußt, sondern werden in die Gasbarriereschicht auch Stoffe eingebracht, die sowohl lebensmittelchemisch bedenklich Weichmacher wie auch umweltbelastend sind, nämlich bei einer Müllverbrennung toxische Verbindungen ergeben können.

Nicht zuletzt führt die Auftragung der Gasbarriereschicht in Form einer wässrigen Dispersion, zusammen auch mit der Möglichkeit, die Klebeschicht mittels bei Raumtemperatur flüssiger oder plastischer Klebstoffe zu bilden, zu einem maschinentechnisch wesentlich einfacheren und damit auch zuverlässigeren Herstellungsverfahren.

Im einzelnen kann die Gasbarriereschicht im Rahmen der Erfindung aus unterschiedlichen Stoffen bestehen. Zunächst ist bevorzugt, wie dies weiter unten auch noch im einzelnen erläutert ist, eine wässrige Dispersion aus Polyvinylidenchlorid (PVDC). Hierbei besteht der Gasbarrierestoff der Dispersion im einzelnen aus 95 % aus Vinylidenchlorid (VDC) und 5 % Vinylchlorid (VC). Die Dispersion enthält dann 50 % Wasser und 50 % an Festanteilen von polymerisierten Produkten (PVDC).

Grundsätzlich könnte die Gasbarriereschicht auch aus einer Dispersion eines neuerdings bekannt gewordenen Stoffes bestehen, nämlich eines Äthylen-Vinylalkohol-Copolymeren (EVAL oder EVOH). Bezüglich der Einzelheiten dieser Stoffes oder dieser Copolymeren wird im übrigen auf die DE-OS 32 41 021 verwiesen.

Im übrigen kann, und auch dies ist ein besonderer Vorteil, bei dem erfindungsgemäßen Verfahren jeder geeignete, in Form einer wässrigen Dispersion verarbeitbare Barrierestoff verwendet werden. So beispielsweise auch amorphs Polyamid, wie es von der Firma DuPont auf den Markt gebracht worden ist. In diesem Zusammenhang wird auch hinsichtlich der notwendigen Offenbarung auf den Artikel "Package Converting" von Stanley Sacharow in der Zeitschrift "Paper, Film & Foile CONVERTER", June 1985, Seite 118 ff. verwiesen.

Das erfindungsgemäße Verfahren, den Barrierestoff in Form einer wässrigen Dispersion auf eine der Folien aufzubringen, ist auch mit dem wesentlichen Vorteil verbunden, - neben der praktisch freien Auswahl der zur Verfügung stehenden Materialien -, daß die Dichte der Barriereschicht - von hoch bis extrem niedrig - frei steuerbar ist. Damit kann gegenüber den bekannten Herstellungsverfahren eine bis zu 10-fach höhere Barrierewirkung erreicht werden.

Die Erfindung besteht neben der besonderen Gasbarriereschicht auch darin, daß die Schrumpffolie eine äußere und eine innere Folie aufweist, daß die äußere Folie eine schrumpfbare Folie ist, die beim Erwärmen auf eine Temperatur in einem mit 70° C beginnenden und unter ihrem Erweichungspunkt endenden Schrumpftemperaturbereich eine maximale lineare Schrumpfbarkeit von 45-50 % aufweist, daß die innere Folie eine thermoplastische Folie ist, deren Erweichungspunkt unter der unteren Grenze des Schrumpftemperaturbereiches der äußeren Folie liegt und eine hohe Klebekraft im erweichten Zustand hat.

Durch die Verwendung einer schrumpfbaren nicht thermofixierten thermoplastischen Folie als äußere Folie wird eine Schrumpffolie geschaffen, die beim Erwärmen auf eine Schrumpftemperatur zusammenschrumpft, so daß sie dann auf der verpackten Ware eine eng anliegende Haut bildet. Hierbei eine wird schrumpfbare, nicht thermofixierte, thermoplastische, nicht kristallisierte, biaxial orientierte und balanciert auf einer Recklanlage gereckte äußere Folie aus Polyester, Polyamid, Polyethylen oder Polypropylen verwendet.

Dadurch, daß als innere Folie eine thermoplastische Folie vorgesehen ist, deren Erweichungspunkt unter der unteren Grenze des Schrumpftemperaturbereiches der äußeren Folie liegt, bildet diese innere Folie eine Siegelschicht, mittels derer die erfindungsgemäße gasbarriereschichthaltige Schrumpffolie durch Aneinanderlegen der inneren Seiten zusammengeschweißt (oder besser: zusammengesiegelt) werden kann, ohne daß während des Siegelns die Schrumpfung eintritt, wenn die zur Siegelung verwendeten Schweißbacken auf eine Temperatur erhitzt werden, die unter der unteren Grenze der Schrumpftemperatur der äußeren Folie und über dem Erweichungspunkt der inneren Folie liegt.

Allgemein sei ausgeführt, daß ein Siegeln möglich ist, wenn eine temperaturfeste Außenschicht und eine temperaturweiche Innenschicht zur Verfügung steht. Die Siegelschicht wird nur soweit erwärmt, daß der Kunststoff der Siegelschicht klebrig wird, das Material jedoch nicht schmilzt. Beim Schweißen dagegen werden alle Schichten soweit erwärmt, daß insgesamt der Kunststoff fließt. An einer so gebildeten Schweißnaht bildet sich am Übergang zu dem unverschweißten Bereich immer eine Dünnstelle, die Naht weist eine geringere Festikeit auf. Durch Schweißen kann man nicht absolut dichte Nähte erhalten, so daß bei hohen Ansprüchen und schnellen Arbeitstakten das Siegeln bevorzugt wird. Jedoch ist bei dem bislang im Stand der Technik bekannten Verbundfolien, wozu lediglich beispielsweise auf die DE-OS 22 13 850 und die DE-OS 32 41 021 verwiesen wird, aufgrund des Herstellungsverfahrens (geblasene, heißkaschierte Folien) nur eine Verschweißung möglich. Hierzu müssen allerdings spezielle Schweißwerkzeuge bereitgestellt werden, die in einem nur sehr engen Temperaturbereich arbeiten können, was die Verarbeitung so hergestellter Folien entsprechend aufwendig macht. Die vorstehend und nachstehend beanspruchte und offenbarte Folie gemäß der Erfindung stellt erstmalig eine schrumpfbare hochgasdichte Vakuumfolie dar, die siegelbar ist und daher den Vorteil erbringt, auf Verpackungsmaschinen mit hoher Geschwindigkeit verarbeitbar zu sein.

Dadurch, daß mithin die innere Folie der erfindungsgemäßen Verbundfolie eine hohe Klebekraft im erweichten Zustand hat, wird erreicht, daß die durch Zusammensiegeln der aneinanderliegenden Innenflächen der erfindungsgemäßen Schrumpffolie gebildete Siegelnaht beim Schrumpfen der äußeren Folie nicht aufgerissen werden kann.

Der unterhalb der Schrumpftemperatur der äußeren Folie liegende Erweichungspunkt der inneren Folie hat darüber hinaus den Vorteil, daß das Schrumpfen der äußeren Folie dann erfolgt, wenn die innere Folie erweicht ist, so daß sie dadurch das Schrumpfen der mit ihr verbundenen äußeren Folie ohne Faltenbildung mitmachen und sich im Falle einer Vakuumverpackung durch den äußeren Druck in alle Vertiefungen der Oberfläche des zu verpackenden Gutes hineindrücken läßt.

Die äußere Folie ist eine biaxial orientierte und im Gegensatz zu einer durch Aufblasen eines Schlauches gereckten oder verzogenen Folie wird eine solche verwendet, die balanciert auf einer Reckanlage gereckt und nicht thermofixiert ist und z.B. aus Polyester, Polyamid, Polyethylen oder Polypropylen besteht. Als innere Folie kann hierbei eine thermoplastische Folie aus einem Ionomer oder einem Polymer auf Äthylenbasis mit einem Gehalt an Vinylacetat verwendet werden.

Darüber hinaus können auch die jeweiligen CO-Werkstoffe der zuvor genannten Werkstoffe verwendet werden, also insbesondere Copolyester, Copolypropylen, Copolyamid und Copolyethylen.

Durch Verwendung einer auf einer Reckanlage gereckten äußeren Folie wird eine erfindungsgemäße Schrumpffolie geschaffen, die in überraschender Weise im Gegensatz zu einer geblasenen Schrumpffolie bei einer Vakuumverpackung in alle Vertiefungen der Oberfläche des verpackten Gutes so hineingezogen wird, daß sie praktisch überall an der Oberfläche des verpackten, insbesondere weichen Gutes, wie z.B. Fleisch, wie eine Haut eng anliegt.

Eine für die Außenfolie der erfindungsgemäßen Schrumpffolie besonders geeignete Folie ist eine Polyesterfolie, die von der Firma Dupont unter der Bezeichnung "Mylar" vertrieben wird. Diese Folie hat einen Schmelzpunkt von 260° und eine maximale, lineare Schrumpfbarkeit von 45 bis 50 % wobei der Schrumpftemperaturbereich zwischen 70 und 110°C liegt.

Eine für die innere Folie der erfindungsgemäßen Schrumpffolie besonders geeignete Folie besteht aus einem Ionomer, das von der Firma Dupont unter der Bezeichnung "Surlyn" vertrieben wird. Gute Ergebnisse zeigt auch die Verwendung der von der Firma Dupont unter der Bezeichnung "CXA" vertriebenen Folie aus einem Polymer auf Äthylenbasis mit Vinylacetat und anderer funktioneller Gruppe.

Durch Verwendung einer weitgehend gasdichten Folie für die äußere und/oder die innere Folie, vorzugweise für die äußere Folie, wird eine erfindungsgemäße Folie geschaffen, die besonders gasdicht ist. Als weitgehend gasdichte Folie kommen solche aus Polyamid oder Polyester in Frage.

Die Gasdichtigkeit der erfindungsgemäßen Schrumpffolie wird dadurch erzeugt, daß zwischen der äußeren und inneren Folie eine besondere Gasbarriereschicht angeordnet ist.

Durch diese zwischen der äußeren und der inneren Folie angeordnete besondere Gasbarriereschicht wird die Möglichkeit geschaffen, bei der Herstellung einer praktisch gasdichten Schrumpffolie gemäß der Erfindung die äußere und die innere Folie aus einer Vielzahl von auch gas- und eventuell wasserdurchlässigen Folien auswählen zu können, die nur in gewünschtem Maße und eventuell erstklassig transparent und glänzend sind und die genannten Schrumpf- und Erweichungseigenschaften und darüber hinaus die für eine Verpackungsfolie erforderlichen Festigkeitseigenschaften haben. Die Gasbarriereschicht muß in Form einer Dispersion vorliegen. Es ergeben sich viele Möglichkeiten, verschiedene für diesen Zweck vorhandene Barrierestoffe in einer jeweils erforderlichen Dicke zu verwenden. Bei einer großen Auswahl von Barrierestoffen kann eine Schrumpffolie geschaffen werden, die an beliebige Verwendungszwecke optimal angepaßt werden kann. Durch den Einschluß der Gasbarriereschicht zwischen der äußeren und inneren Folie kann für diese auch ein gegen mechanische oder chemische Einwirkungen empfindliches Material verwendet werden, da es von den Folien geschützt ist.

Zur Bildung der Gasbarriereschicht hat sich als besonders vorteilhaft eine wässrige Dispersion von Polyvenyliden-Chlorid (im folgenden kurz PVDC genannt) erwiesen, die von der Firma Solvay unter der Bezeichnung "Ixan" vertrieben wird.

Als Klebeschicht zwischen der Gasbarriereschicht und der Außenfolie hat sich ein Primer, aufgebaut auf organischen Lösungsmitteln und darin gelöstem hochmolekularem Polyester als besonders vorteilhaft erwiesen, der unter der Bezeichnung "Primer Adcote 376" von der Firma Morton Chemical Europe, Bremen, vertrieben wird.

Als Kleber zum Ankleben der Innenfolie an die Gasbarriereschicht kann entweder ein Zweikomponenten-Kleber auf Polyurethanbasis, der von der Firma Wikolin unter der Bezeichnung "Pentacol" vertrieben wird, oder ein Einkomponenten-Kleber, der von der Firma Henkel unter der bezeichnung "Liofol" vertrieben wird, verwendet werden.

Die Erfindung ermöglicht es also, eine Schrumpffolie zu schaffen, die praktisch gasundurchläsig ist, so daß sich in dem Bereich der Verpackung und Lagerung von stark sauerstoffgefährdeten Füllgütern, wie Fleisch, Wurst und Käse, völlig neue Möglichkeiten ergeben. Im Gegensatz zu Verpackungsverfahren, bei denen die Verpackungsfolie tiefgezogen und dabei die Gasbarriereschicht teilweise zerstört wird, werden beim Schrumpfen der erfindungsgemäßen Schrumpffolie die Barriereeigenschaften der Gasbarriereschicht verbessert.

Das erfindungsgemäße Verfahren geht von einem Verfahren zur Herstellung einer Schrumpf-Verbundfolie, mit mindestens zwei verbundenen Folien und einer zwischen diesen ausgebildeten Gasbarriereschicht,

wobei die eine Folie aus einem Polyester-, Polyamid-, Polyethylen- oder Polypropylen-Werkstoff

und die andere Folie aus einem Ionomer oder einem Polymer auf Äthylenbasis mit einem Gehalt an Vinylacetat besteht, bei dem zunächst die eine der Folien biaxial gereckt wird und diese gereckte Folie sodann mit einer Klebeschicht versehen wird und mit der anderen Folie verklebt wird, aus und ist dadurch gekennzeichnet, daß die biaxial gereckte Folie ohne Thermofixierung gereckt wird, daß beide Folien mit einer Klebeschicht versehen werden, daß der Barrierestoff der Gasbarriereschicht in Form einer Dispersion bei Raumtemperatur auf eine der Folien aufgebracht wird und die verbundenen Folien sodann gemeinsam geschrumpft werden.

Dieses Verfahren ermöglicht es, wie bereits oben ausgeführt, für die einzelnen Komponenten der nach diesem Verfahren gebildeten Verbundfolie, das jeweils optimal geeignete Material zu verwenden und dadurch eine insbesondere für die Verpackung besonders geeignete schrumpfbare Verbundfolie zu schaffen.

Bei einer vorteilhaften Ausführungsform des erfindungsgemäßen Verfahrens ist vorgesehen, daß zur Bildung einer Gasbarriereschicht eine wässrige Dispersion eines Gasbarrierematerials auf die äußere Folie aufgetragen und auf eine Temperatur erhitzt wird, bei der die äußere Folie nicht auf ihre Schrumpftemperatur erwärmt wird, bis das dispergierte Material zu einer gasundurchlässigen Schicht koalesziert.

Die erste Folie wird zunächst mit Hilfe eines Roll- bzw. Walzenmechanismus mit einer Klebstoffschicht versehen, dem sogenannten "Primer". Nach Beschichtung mit dem Primer wird die Folienbahn durch eine Trocknungsanlage geführt, um die Klebstoffschicht anzutrocknen. Die Trocknungsanlage kann beispielsweise eine Warmlufttrocknung sein. Sodann wird mittels eines weiteren Auftrag-Walzensystems, vergleichbar denen, die zum Aufbringen der Klebeschichten verwendet werden, die Gasbarriereschicht aufgebracht, also beispielsweise die wässrige PVDC-Dispersion. Die so beschichtete Folienbahn wird infrarot bestrahlt, um eine Filmbildung zu bewirken. Weiterhin wird die Folienbahn dann durch eine Anlage geleitet, in der das in der Dispersion enthaltene Wasser verdunstet. Hierzu kann beispielsweise wiederum Warmluft auf die Folie geblasen werden. Nach Verdunstung des Wassers wird die so beschichtete erste Folie mittels eines walzenartigen Auftragssystems mit einem Zweikomponenten-Polyurethan-Kleber beschichtet und dann mit der zweiten Folie verbunden (kaschiert). Nach dieser Verbindung liegt eine dreischichtige Verbundfolie mit Gasbarriereschicht vor, die zu einer Folienrolle aufgewickelt werden kann.

Die Erfindung ist nachstehend noch im einzelnen an Hand der auf der beigefügten Zeichnung dargestellten Ausführungsbeispielen näher erläutert. Auf der beigefügten Zeichnung zeigt:

Fig. 2    eine erfindungsgemäße Folie mit dreischichtigem Aufbau;

Fig. 3    einen ersten Abschnitt einer Anlage zur Herstellung einer erfindungsgemäßen Verbundfolie.

Fig. 4    den zweiten, sich unmittelbar anschließenden Abschnitt der Anlage gemäß Fig 3.

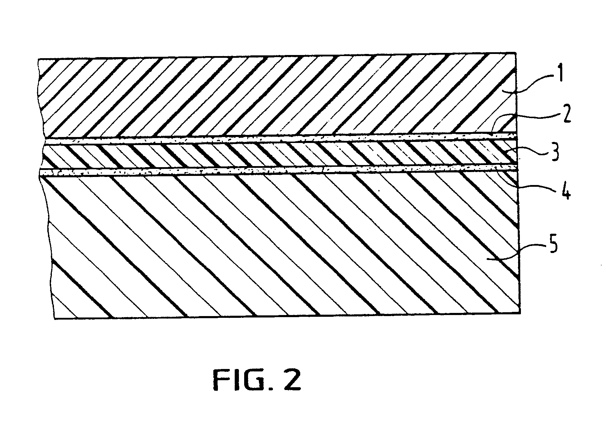

Die Fig. 2 zeigt einen stark vergößerten, schematischen Querschnitt eines Bereiches eines Ausführungsbeispieles einer erfindungsgemäßen dreilagigen Schrumpffolie, mit Gasbarriereschicht.

Das in der Zeichnung im Schnitt etwa 1000-fach vergrößert dargestellte Ausführungsbeispiel einer erfindungsgemäßen dreilagigen Folie besteht zunächst aus einer äußeren Folie, 15 $\mu$m stark, die eine biaxial balanciert gereckte und nicht thermofixierte Polyesterfolie ist, gleichfalls im Handel von der Firma Dupont unter der Bezeichnung "Mylar" vertrieben. Diese Folie stimmt mit der zuvor beschriebenen äußeren Folie überein und besitzt daher eine im Temperaturbereich von 70-110°C mit anteigender Temperatur zunehmende lineare Schrumpfbarkeit auf 45-50 %.

Diese äußere Folie 1 ist über eine Klebeschicht 2 mit einer Gasbarriereschicht 3 verbunden. Als Klebeschicht 2 dient bei dem Ausführungsbeispiel gemäß Fig. 2 ein Primer, aufgebaut auf organischen Lösungsmitteln und darin gelöstem hochmolekularem Polyester, der von der Firma Morton Chemical Europe, Bremen, unter der Bezeichnung "Primer Adcote 376" vertrieben wird oder ein Kleber auf Polyurethan-Basis. Die Gasbarriereschicht 3 ist beim dargestellten Ausführungsbeispiel durch eine koaleszierte Schicht aus einer wässrigen PVDC-Dispersion gebildet, die im Handel von der Firma Solvay unter der Bezeichnung "Ixan" vertrieben wird.

Die Gasbarriereschicht 3 ist mit einem Kleber 4 auf Polyurethan-Basis mit einer 30 $\mu$m starken inneren Folie 5 verbunden. Beim dargestellten Ausführungsbeispiel dient als innere Folie 5 eine Ionomerfolie, die von der Firma Dupont unter der Bezeichnung "Surlyn" vertrieben wird. Die innere Folie hat einen bei 58° bis 60° liegenden Erweichungspunkt (bei Verwendung anderer, weiter oben erwähnter Alternativwerkstoffe für die innere Folie kann der Erweichungspunkt auch bis zu 80° betragen) und eine sehr große Heißklebekraft, d.h. wenn zwei Lagen dieser Folie durch Erwärmen auf eine über dem Erweichungspunkt liegende Temperatur miteinander versiegelt werden, diese Verbindung auch bei Anwendung verhältnismäßig großer Kräfte nicht gelöst werden kann. Als Kleber 4 ist bei dem dargestellten Ausführungsbeispiel ein Zweikomponenten-Kleber auf Polyurethanbasis vorgesehen, der von der Firma Henkel unter der Bezeichnung "Liofol" vertrieben wird. Anstelle von Liofol kann auch ein Einkomponenten-Kleber auf Polyurethanbasis verwendet werden, der von der Firma Wikolin unter der Bezeichnung "Pentacoll" vertrieben wird.

Beim Herstellen des in der Zeichnung in Fig. 2 dargestellten Ausführungsbeispieles wird zunächst die äußere Folie 1 auf einer Seite mit der Klebeschicht 2 in einer Dicke beschichtet, die eine Trokkendicke von 0,5 bis 1g/m2 ergibt. Auf die Klebeschicht 2 wird dann anschließend die wässrige PVDC-Dispersion aufgetragen, in einer Stärke bis die PVDC-Partikel der Dispersion eine Schicht von 6 $\mu$m ergeben, und durch Bestrahlung auf eine Temperatur von 70°C erwärmt, bei der die äußere Folie 1 noch nicht auf ihre Schrumpftemperatur erwärmt wird. Diese Erwärmung der Gasbarriereschicht erfolgt so lange, bis die PVDC-Partkel ser Dispersion zu einer zusammenhängenden Schicht weitgehend koaleszieren.

Auf die so gebildete Gasbarriereschicht 3 wird der Kleber 4 in einer Stärke von 1 $\mu$m aufgetragen und mit der inneren Folie 5 zusammengeklebt.

Beim Verpacken wird diese so erzeugte Verbund-Schrumpffolie so an die zu verpackende Ware gelegt, daß die innere Folie 5 an der Ware anliegt und die äußere Folie 1 der Außenfläche bildet. Bei der so gebildeten Verpackung werden dann am Schließrand die aneinanderstoßenden Ränder der Verbundfolie mit aneinaderliegenden inneren Folien 5 zwischen Schweißbacken eines Schweißwerkzeuges aneinandergedrückt, das auf eine unmittelbar unter der Schrumpftemperatur der äußeren Folie 1 liegende Temperatur von 69°C erhitzt ist, die 10° über dem Erweichungspunkt der inneren Folie liegt. Dadurch werden die beiden aneinanderliegenden Ränder der inneren Folie miteinander versiegelt. Dieses Verschließen des Paketes erfolgt unter einem Vakuum, so daß in dem so versiegelten Paket ein starker Unterdruck herrscht. Das versiegelte Paket wird dann in heißes Wasser von 95°C getaucht. Beim Schrumpfen wird das Material der Gasbarriere auf die Temperatur bis 95°C erwärmt. Dabei koaleszieren die PVDC-Partikel vollständig zu einem geschlossenen Film und bilden so das Maximum an erreichbarer Gasbarriere einer PVDC-Beschichtung. Auch die äußere Folie 1 wird dabei auf eine Temperatur mitten in ihrem Schrumpfbereich erwärmt, so daß die ganze Verbundfolie so stark zusammenschrumpft, daß sich die Folie eng an die Oberfläche des verpackten Materials anschmiegt. Da diese Temperatur weit über dem Erweichungspunkt der inneren Folie 5 liegt, wird die Verbundfolie so weich, daß sie sich auch in Vertiefungen der Ware durch das Vakuum hineinzeihen läßt, so daß sie an der ganzen Oberfläche der Ware wie eine zweite Haut dicht anliegt. Dies hat weiterhin zur Folge, daß an allen Stellen, an denen die Folie von beiden Seiten Hohlräume überbrückt, diese beiden Seiten mit ihren Innenfolien aneinandergezogen und dabei miteinander zusammengesiegelt werden. So werden beispielsweise die Randteile neben der Verschlußnaht zusätzlich "nachversiegelt".

Die Erfindung ermöglicht es also, eine Ware praktisch ohne Lufteinschlüsse und völlig gasdicht zu verpacken, da die gemäß der Erfindung hergestellte Gasbarriereschicht 3 praktisch völlig gasundurchlässig ist. Dadurch, daß die Verbundfolie dicht wie eine Haut an der ganzen Oberfläche der Ware anliegt, wird z.B. beim Verpacken von Fleisch erreicht, daß aus dem Fleisch kein Saft austreten kann, wodurch das Fleisch auch bei langem Lagern durch den gasdichten Abschluß frisch bleibt. Dies errmöglicht beispielsweise eine Verwendung von Schalen aus Kunststoff, wobei gegen deren Oberfläche die innenliegende Siegelschicht einer erfindungsgemäßen Folie eine peelbare Haftung eingeht, so daß der Saft aus dem Frischfleisch nicht austreten kann. Das Frischfleisch behält so seinen maximal erreichbaren Wert an Saftanteilen im Fleisch bei. Bei tiefgefrorenen Produkten, wie Geflügel, wird der das Füllgut schädigende, durch Austrocknen verursachte "Frostbrand" vermieden.

Anstelle der Polyesterfolie für die Außenfolie 1 kann auch eine Folie aus einem anderen Kunststoff, z.B. aus Polyamid oder Polypropylen, verwendet werden, wenn diese Folie die für die Außenseite einer Verpackungsfolie erforderlichen Festigkeitseigenschaften und die oben geschilderten Schrumpfeigenschaften besitzt.

Anstelle einer Ionomerfolie für die innere Folie 5 kann ebenfalls ein beliebiger Kunststoff verwendet werden, der einen Erweichungspunkt hat, der genügend weit unter der Schrumpftemperatur der äußeren Folie liegt, so daß die innere Folie als Siegelschicht dienen kann, z. B. die von der Firma Dupont mit der Bezeichnung "CXA" vertriebene Folie aus einem auf Äthylen basierten Polymer mit Vinylacetat und anderer Funktionalgruppe.

Als Kleber können jeweils den gewählten Folien angepaßte, im Handel erhältliche Stoffe verwendet werden.

Die äußere Folie 1 und die innere Folie 5 können selbst bereits Verbundfolien sein. Für die äußere Folie 1 kommen außer den genannten Stoffen auch die folgenden in Frage: Halogenkohlenwasserstoffpolymere, Vinylidenchloridpolymere, Polyacrylnitrit, Vinylalkoholmischpolymerisate, Estermischpolymerisate, Estercopolymere und andere. Wichtig ist lediglich, daß in den oben genannten Fällen die äußere Folie 1 eine biaxial orientierte und balanciert auf einer Reckanlage gereckte und nicht thermofixierte Folie ist, die mit einer Schrumpftemperatur herstellbar ist, die über dem Erweichungspunkt der inneren Folie 5 liegt.

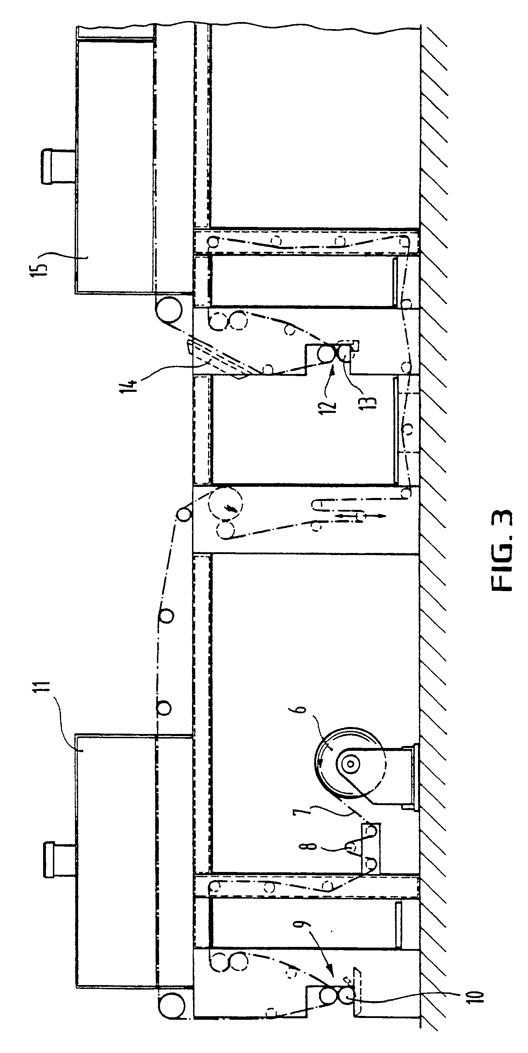

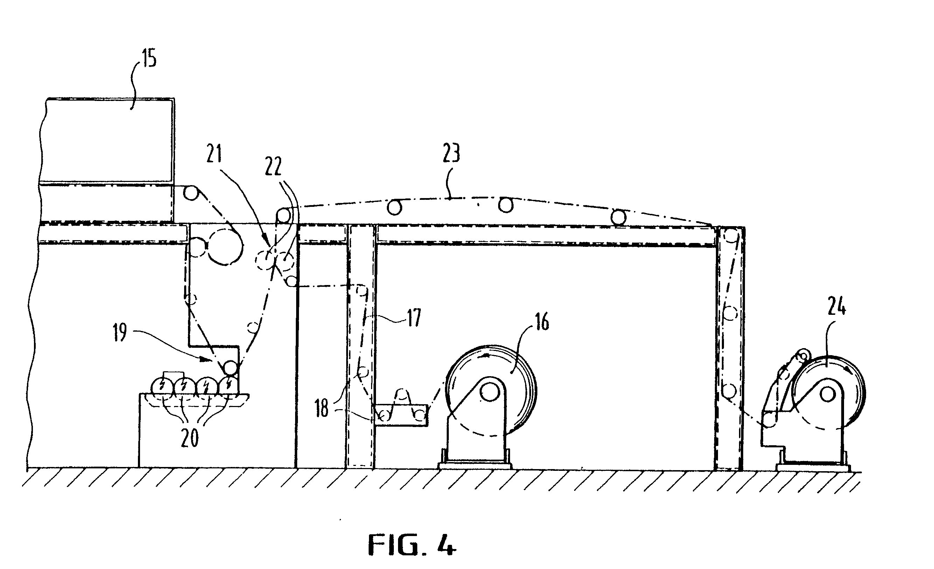

In Fig. 3 ist ein erster Teil einer Anlage zur Herstellung einer erfindungsgemäßen Folie, bei dem dargestellten Ausführungsbeispiel zur Herstellung einer dreilagigen Folie mit Gasbarriereschicht, dargestellt.

In Fig. 4 ist der zweite Teil dieser Anlage dargestellt. Die Aufteilung in zwei Figuren wurde nur aus Gründen der Übersichtlichkeit vorgenommen, im übrigen handelt es sich aber um eine einzige, kontinuierlich durchsetzte Anlage.

Eine bereits aufgerollt in Form einer Rolle 6 vorhandene Folienbahn 7, die beispielsweise die biaxial balanciert gereckt und nicht thermofixierte Polyesterfolie der Firma Dupont "Mylar" sein kann, wird über geeignete Rollenelemente 8 abgewickelt und bei 9, an einer Primer-Station, mit einer Klebstoffschicht, oder eben einem Primer versehen, welcher ein Zweikomponenten-KLeber auf Polyurethanbasis sein kann, wie er von der Firma Morton Tiocol GmbH, Bremen, unter der Bezeichnung "Primer Adcote 376" vertrieben wird. Dieser Kleber befindet sich, in flüssigem Zustand, in einem Gefäß und wird aus diesem mittels einer Walze 10 entnommen und auf die Folienbahn 7 aufgetragen.

Anschließend läuft die Folienbahn 7 durch eine Trocknungsstation 11, in welcher der Primer angetrocknet wird. In der Beschichtungsstation 12 wird die Beschichtung der Folienbahn 7 mit der Gasbarriereschicht vorgenommen. Bei dem Ausführungsbeispiel befindet sich in der Beschichtungsstation 12, vergleichbar wiederum wie in der Primerstation 9, in einem Gefäß eine wässrige PVDC-Dispersion, die wiederum mittels einer Walze 13 aus dem Gefäß entnommen und auf die Folienbahn 7 aufgetragen wird.

Hieran anschließend läuft die Folienbahn 7 unter einem Infrarotstrahler 14 entlang, mittels dessen eine homogene Filmbildung der PVDC-Beschichtung erreicht wird, nämlich durch leichtes anschmelzen der PVDC-Beschichtung. Danach läuft die Folienbahn 7 durch ein Anlagenteil 15, das der Wasserverdunstung dient, um aus der wässrigen Dispersion das Wasser zu entziehen. Dieses Anlagenteil dient nur der Beschleunigung des Verfahrens, ansonsten könnte die Folienbahn 7 zu diesem Zweck auch einfach der Atmosphäre ausgesetzt werden. Bevorzugt wird jedoch in dem Anlagenteil 15 die Folienbahn 7 mit angewärmter Luft beaufschlagt, um die Verdunstung des Wassers zu beschleunigen.

Weiter befindet sich in der in Fig. 4 gezeigten Anlage eine weitere in Form einer Rolle 16 aufgewickelte Folienbahn 17, bei der es sich bei dem Ausführungsbeispiel um eine Ionomerfolie handelt, die von der Firma Dupont unter der Bezeichnung "Surlyn" vertrieben wird. Diese Folienbahn 17 wird über weitere geeignete Rollen 18 zu einer Verbindungsstation 21 geführt, in der sie mit der Folienbahn 7 verbunden wir, nachdem die Folienbahn 7 noch eine Beschichtungsstation 19 durchlaufen hat, mittels derer auf die Folienbahn 7 bzw. auf die PVDC-Schicht eine weitere Klebstoffschicht aufgebracht worden ist. Diese Klebstoffschicht wird bei dem Ausführungsbeispiel aus dem schon zuvor erwähnten Zweikomponenten-Kleber auf Polyurethanbasis gebildet, der von der Firma Henkel unter der Bezeichnung "Liofol" vertrieben wird. Auch dieser Klebstoff liegt bei Raumtemperatur flüsig vor und wird mittels Walzen 20 auf die Folienbahn 7 aufgetragen . Die so beschichtete Folienbahn 7 wird mit der Folienbahn 17 in der Verbindungsstation 21 verbunden, in dem die beiden Folien zwischen Walzen 22 zusammengeführt und zusammengepreßt werden. Die entstandene Verbundfolie 23 wird zu einer Folienrolle 24 aufgewickelt.

## Bezugszeichenliste

===================

1. Folie, äußere
2. Klebeschicht
3. Gasbarriereschicht
4. Kleber
5. Folie, innere
6. Rolle
7. Folienbahn
8. Rollenelement
9. Primerstation
10. Walze
11. Trocknungsstation
12. Beschichtungsstation
13. Walze
14. Infrarotstrahler
15. Anlagenteil
16. Rolle
17. Folienbahn
18. Rolle
19. Beschichtungsstation
20. Walzen
21. Verbindungsstation
22. Walze
23. Verbundfolie
24. Folienrolle

**Patentansprüche**

1. Verfahren zur Herstellung einer Schrumpf-Verbundfolie, mit mindestens zwei verbundenen Folien und einer zwischen diesen ausgebildeten Gasbarriereschicht,

wobei die eine Folie aus einem Polyester-, Polyamid-, Polyethylen- oder Polypropylen-Werkstoff

und die andere Folie aus einem Ionomer oder einem Polymer auf Äthylenbasis mit einem Gehalt an Vinylacetat besteht,

bei dem zunächst die eine der Folien biaxial gereckt wird und diese gereckte Folie sodann mit einer Klebeschicht versehen wird und mit der anderen Folie verklebt wird, dadurch gekennzeichnet, daß die biaxial gereckte Folie ohne Thermofixierung gereckt wird, daß beide Folien mit einer Klebeschicht versehen werden, daß der Barrierestoff der Gasbarriereschicht in Form einer Dispersion bei Raumtemperatur auf eine der Folien aufgebracht wird und die verbundenen Folien sodann gemeinsam geschrumpft werden.

2. Verfahren nach Anspruch 1, dadurch gekennzeichnet, daß die Klebeschicht aus einem Kleber auf Polyurethanbasis vorgesehen ist.

3. Verfahren nach Anspruch 1 oder 2, dadurch gekennzeichnet, daß als andere Folie eine thermoplastische innere Folie (5) verwendet wird, deren Erweichungspunkt unter der unteren Grenze des Schrumpftemperaturbereiches der biaxial gereckten äußeren Folie (1) liegt.

4. Verfahren nach einem der vorstehenden Ansprüche, dadurch gekennzeichnet, daß eine thermoplastische äußere Folie (1) verwendet wird, die beim Erwärmen auf Temperaturen in einem mit 70° C beginnenden und unter ihrem Erweichungspunkt endenden Schrumpftemperaturbereich eine max. lineare Schrumpfbarkeit von 45-50% aufweist.

5. Verfahren nach einem der vorstehenden Ansprüche, dadurch gekennzeichnet, daß als thermoplastische innere Folie (5) eine Folie verwendet wird, deren Erweichungspunkt unter 65° C liegt.

6. Verfahren nach Anspruch 5, dadurch gekennzeichnet, daß der Erweichungspunkt der inneren Folie (5) bei 58-60° C liegt.

7. Verfahren nach einem der vorstehenden Ansprüche, dadurch gekennzeichnet, daß als Klebeschicht (2) für die Haftung der Gasbarriereschicht (3) an der äußeren Folie (1) ein Primer auf Polyesterbasis verwendet wird.

8. Schrumpffolie, die als Verbundfolie eine äußere und eine innere Folie (1 bzw. 5) aufweist und eine Gasbarriereschicht, dadurch gekennzeichnet, daß die äußere Folie (1) eine schrumpfbare, nicht thermofixierte, thermoplastische, nicht kristallisierte Folie ist, die biaxial orientiert ist und balanciert auf einer Reckanlage gereckt ist, aus Polyester, Polyamid Polyethylen oder Polypropylen besteht, beim Erwärmen auf eine Temperatur in einem mit 70°C beginnenden und unter ihrem Erweichungspunkt endenden Schrumpftemperaturbereich eine maximale lineare Schrumpfbarkeit von 45-50% aufweist, daß die innere Folie (5) eine thermoplastische Folie ist, deren Erweichungspunkt unter der unteren Grenze des Schrumpftemperaturbereiches der äußeren Folie (1) liegt und eine hohe Klebekraft im erweichten Zustand hat und daß zwischen der äußeren und der inneren Folie (1 bzw. 5) eine Gasbarriereschicht in Form einer Dispersion eines Barrierestoffs angeordnet ist und daß eine Verbindung der Folien (1,5) durch eine jeweils auf die zugewandten Flächen der äußeren und inneren Folie (1,5) aufgebrachten Kleberschicht besteht.

9. Schrumpffolie nach Anspruch 8, dadurch gekennzeichnet, daß die äußere Folie (1) weitgehend gasdicht ist und aus Polyamid oder Polyester besteht.

10. Schrumpffolie nach Anspruch 8 oder 9, dadurch gekennzeichnet, daß sie als Barrierestoff Polyvinylidenchlorid enthält.

11. Schrumpffolie nach einem der Ansprüche 8 - 10, dadurch gekennzeichnet, daß die innere Folie (5) eine thermoplastische Folie ist und aus einem Ionomer oder einem Polymer auf Äthylenbasis mit einem Gehalt an Vinylacetat besteht.

12. Schrumpffolie nach Anspruch 11, dadurch gekennzeichnet, daß die Ionomer-Folie einen Erweichungspunkt unter 65°C besitzt.

13. Schrumpffolie nach Anspruch 12, dadurch gekennzeichnet, daß der Erweichungspunkt bei 58-60°C liegt.

14. Schrumpffolie nach einem der Ansprüche 8 - 13, dadurch gekennzeichnet, daß die Klebeschicht (2) aus einem Primer, aufgebaut auf organischen Lösungsmitteln mit darin gelöstem hochmolekularem Polyester besteht.

15. Schrumpffolie nach einem der Ansprüche 8 - 14, dadurch gekennzeichnet, daß die Klebeschicht (2) aus einem Kleber auf Polyurethanbasis besteht.

16. Schrumpffolie nach einem der Ansprüche 8 - 15, dadurch gekennzeichnet, daß die äußere Folie (1) eine Dicke von 10 - 25 $\mu$m und die innere Folie (5) eine Dicke von 10 - 100 $\mu$m besitzt.

17. Schrumpffolie nach einem der Ansprüche 8 - 16, dadurch gekennzeichnet, daß die Dicke der äußeren Folie 15 $\mu$m, der inneren Folie 30 $\mu$m und der Gasbarriereschicht aus Polyvinylidenchlorid 6g/m$^2$ beträgt.

18. Verwendung der Schrumpffolie nach einem der Ansprüche 8 - 17 als Verpackungsfolie.

**Claims**

1. Process for the production of a composite shrink film having at least two bonded films and a gas-barrier layer formed between these films,
   the first film comprising a polyester, polyamide, polyethylene or polypropylene material
   and the other film comprising an ionomer or polymer based on ethylene and containing vinyl acetate,
   in which firstly the first of the films is biaxially stretched, and this stretched film is then provided with an adhesive coating and bonded to the other film, characterised in that the biaxially stretched film is stretched without thermofixing, in that both films are provided with an adhesive coating, in that the barrier material of the gas-barrier layer is applied to one of the films at room temperature in the form of a dispersion and the bonded films are then shrunk jointly.

2. Process according to Claim 1, characterised in that the adhesive coating is provided from a polyurethane-based adhesive.

3. Process according to Claim 1 or 2, characterised in that the other film used is a thermoplastic inner film (5) whose softening point is below the lower limit of the shrink temperature range of the biaxially stretched outer film (1).

4. Process according to one of the preceding claims, characterised in that a thermoplastic outer film (1) is used which has a maximum linear shrinkability of 45-50% on warming to temperatures in a shrink temperature range beginning at 70° C and ending below its softening point.

5. Process according to one of the preceding claims, characterised in that the thermoplastic inner film (5) used is a film whose softening point is below 65° C.

6. Process according to Claim 5, characterised in that the softening point of the inner film (5) is 58-60° C.

7. Process according to one of the preceding claims, characterised in that the adhesive coating (2) used for the adhesion of the gas-barrier layer (3) to the outer film (1) is a polyester-based primer.

8. Shrink film which contains, as composite film, an outer film and in inner film (1 and 5 respectively) and a gas-barrier layer, characterised in that the outer film (1) is a shrinkable, non-thermofixed, thermoplastic, non-crystallised film which has been biaxially oriented and has been stretched in a balanced manner on a stretching unit, comprises polyester, polyamide, polyethylene or polypropylene, and has a maximum linear shrinkability of 45-50% on warming to a temperature in a shrink temperature range beginning at 70° C and ending below its softening point, in that the inner film (5) is a thermoplastic film whose softening point is below the lower limit of the shrinkage temperature range of the outer film (1) and has high adhesive power in the softened state, and in that a gas-barrier layer is arranged between the outer and inner films (1 and 5 respectively) in the form of a dispersion of a barrier material, and in that a bond of the films (1, 5) exists by means of an adhesive coating applied to both the facing surfaces of the outer and inner films (1, 5).

9. Shrink film according to Claim 8, characterised in that the outer film (1) is substantially gas-impermeable and comprises polyamide or polyester.

10. Shrink film according to Claim 8 or 9, characterised in that it contains polyvinylidene chloride as the barrier material.

11. Shrink film according to one of Claims 8-10, characterised in that the inner film (5) is a thermoplastic film and comprises an ionomer or polymer based on ethylene and containing vinyl acetate.

12. Shrink film according to Claim 11, characterised in that the ionomer film has a softening point of below 65° C.

13. Shrink film according to Claim 12, characterised in that the softening point is 58-60° C.

14. Shrink film according to one of Claims 8-13, characterised in that the adhesive coating (2) comprises a primer built up from organic solvents with high-molecular-weight polyester dissolved therein.

15. Shrink film according to one of Claims 8-14, characterised in that the adhesive coating (2) comprises a polyurethane-based adhesive.

16. Shrink film according to one of Claims 8-15, characterised in that the outer film (1) has a thickness of 10-25 $\mu$m and the inner film (5) has a thickness of 10-100 $\mu$m.

17. Shrink film according to one of Claims 8-16, characterised in that the thickness of the outer film is 15 $\mu$m, the thickness of the inner film is 30 $\mu$m, and the polyvinylidene chloride gas-barrier layer has a thickness of 6 g/m$^2$.

18. Use of the shrink film according to one of Claims 8-17 as a packaging film.

## Revendications

1. Procédé pour la fabrication d'une feuille composite en stratifié susceptible de retrait, formée d'au moins deux feuilles assemblées, entre lesquelles est disposée une couche formant barrière aux gaz, l'une des feuilles étant formée d'une matière à base de polyester, polyamide, polyéthylène ou polypropylène, et l'autre feuille d'un ionomère ou d'un polymère à base d'éthylène et d'une certaine proportion d'acétate de vinyle, dans lequel procédé l'une des feuilles est tout d'abord étirée bi-axialement, est ensuite revêtue d'une couche de colle puis est amenée à adhérer à l'autre feuille, caractérisé en ce que la feuille étirée bi-axialement est étirée sans thermofixage, en ce que les deux feuilles sont revêtues d'une couche de colle, en ce que la matière de la couche formant barrière aux gaz est appliquée, à température ambiante, sous forme de dispersion sur l'une des feuilles, et en ce que les feuilles assemblées sont ensuite ensemble soumises à un retrait.

2. Procédé selon la revendication 1, caractérisé en ce que la couche de colle contient un adhésif à base de polyuréthane.

3. Procédé selon la revendication 1 ou 2, caractérisé en ce que l'on utilise, comme autre feuille, une feuille intérieure (5) en matière thermoplastique dont le point de ramollissement est inférieur à la limite inférieure du domaine de température de retrait de la feuille extérieure étirée bi-axialement (1).

4. Procédé selon l'une des revendications précédentes, caractérisé en ce que l'on utilise une feuille extérieure thermoplastique qui, lors du réchauffage à des températures situées dans une plage de températures de retrait supérieure ou égale à 70° C et inférieure à celle de son point de ramollissement, présente un coefficient de retrait linéaire maximum de 45 à 50%.

5. Procédé selon l'une des revendications précédentes, caractérisé en ce qu'on emploie, comme feuille thermoplastique intérieure (5), une feuille dont le point de ramollissement est inférieur à 65°.

6. Procédé selon la revendication 5, caractérisé en ce que le point de ramollissement de la feuille intérieure (5) est situé entre 58 et 60° C.

7. Procédé selon l'une des revendications précédentes, caractérisé en ce que l'on utilise, comme couche de colle pour assurer l'adhérence de la couche formant barrière aux gaz (3) à la feuille extérieure (1), une couche primaire à base de polyester.

8. Feuille susceptible de retrait, sous forme de feuille composite comportant une feuille extérieure et une feuille intérieure et une couche formant barrière aux gaz, caractérisée en ce que la feuille extérieure (1) est une feuille thermoplastique non cristallisée, susceptible de retrait, non thermofixée, orientée bi-axialement et étirée de façon équilibrée sur une installation d'étirage, laquelle feuille est formée de polyester, de polyamide, de polyéthylène ou de polypropylène, et présente une aptitude linéaire maximum au retrait comprise entre 45 et 50%, par réchauffage à une température située dans une plage de températures de retrait supérieure ou égale à 70° C et inférieure à celle de son point de ramollissement, en ce que la feuille intérieure (5) est une feuille thermoplastique dont le point de ramollissement est inférieur à la limite inférieure de la plage de températures de retrait de la feuille extérieure (1) et qui présente, à l'état ramolli, un pouvoir collant élevé et en ce qu'entre la feuille extérieure et la feuille intérieure (1, 5) est formée une couche formant barrière aux gaz appliquée sous forme d'une dispersion d'une matière ayant cette aptitude, et en ce que la liaison des feuilles (1, 5) est réalisée à l'aide d'une couche de colle appliquée sur chacune des faces en regard l'une de l'autre de la feuille extérieure et de la feuille intérieure (1, 5) respectivement.

9. Feuille susceptible de retrait selon la revendication 8, caractérisée en ce que la feuille extérieure (1) est relativement étanche aux gaz et est formée de polyamide ou de polyester.

10. Feuille susceptible de retrait selon la revendication 8 ou 9, caractérisée en ce que la matière formant barrière est formée de chlorure de polyvinyle.

11. Feuille susceptible de retrait selon l'une des revendications 8 à 10, caractérisée en ce que la feuille intérieure (5) est une feuille thermoplastique et en ce qu'elle est composée d'un ionomère ou d'un polymère à base d'éthylène présentant une certaine proportion d'acétate de vinyle.

12. Feuille susceptible de retrait selon la revendication 11, caractérisée en ce que la feuille formée d'ionomère présente un point de ramollissement inférieur à 65° C.

13. Feuille susceptible de retrait selon la revendication 12, caractérisée en ce que le point de ramollissement est situé entre 58 et 60° C.

14. Feuille susceptible de retrait selon l'une des revendications 8 à 13, caractérisée en ce que la couche de colle (2) est formée d'une couche primaire à base de solvants organiques dans lesquels est dissous du polyester à haut poids moléculaire.

15. Feuille susceptible de retrait selon l'une des revendications 8 à 14, caractérisée en ce que la couche de colle (2) est formée d'une colle à base de polyuréthane.

16. Feuille susceptible de retrait selon l'une des revendications 8 à 15, caractérisée en ce que la feuille extérieure (1) présente une épaisseur de 10 à 25 μm et la feuille intérieure (5) une épaisseur de 10 à 100 μm.

17. Feuille susceptible de par retrait selon l'une des revendications 8 à 16, caractérisée en ce que l'épaisseur de la feuille extérieure est de l'ordre de 15 μm, celle de la feuille intérieure de l'ordre de 30 μm et la couche formant barrière aux gaz à base de chlorure de polyvinyle de l'ordre de 6 g/m².

18. Application de la feuille susceptible de retrait selon l'une des revendications 8 à 17 comme feuille d'emballage.

FIG. 2

FIG. 3

EP 0 231 296 B1

FIG. 4

EP 0 231 296 B1